# EUROPEAN PATENT APPLICATION

(11) **EP 4 797 873 A1**
(43) Date of publication of application: **26.08.2026**
(21) Application number: 26152066.2
(22) Date of filing: 15.01.2026
(51) Int. Cl.: H05B 45/10, B60Q 1/04, F21S 41/663, H05B 47/105, H05B 45/14, H05B 45/18

(54) **LIGHT ASSEMBLY AND LIGHT CONTROL METHOD FOR VEHICLE AND VEHICLE**

(30) Priority: 19.02.2025 CN 202510183114
(71) Applicant: Stellantis Auto SAS, 78300 Poissy (FR)
(72) Inventor: WU, TING, SHANGHAI, 200030 (CN); ABDELMOUMNI, RACHID, 25400 TAILLECOURT (FR); FIALA, DANIEL HENRIQUE, 90000 BELFORT (FR); AFROUG, MOHAMED, 90160 BESSONCOURT (FR); XI, JIA HAO, SHANGHAI, 200030 (CN)
(74) Representative: ESIP

(57) **Abstract**

A light assembly for a vehicle and a light control method are provided. The light assembly comprises: a first light module and a second light module; and a control module configured to control brightness of the first light module and the second light module, wherein the control module is further configured to control one of the first light module and the second light module to be turned on to provide low beam illumination, or control another of the first light module and the second light module to be turned on to provide high beam illumination or control both of the first light module and the second light module to be turned on to provide high beam illumination. In addition, in a high beam mode, brightness can be superimposed by turning on two light modules at the same time, which can achieve higher brightness output, and maintain illuminating function partially by one of the light modules when another of the light modules fails, thereby improving the reliability and safety of the entire light assembly.

## Description

### RELATED FIELD

The present disclosure relates to the field of vehicles, and in particular to the field of illuminating systems of vehicles. More specifically, the present disclosure relates to a light assembly for a vehicle, a light control method for a vehicle, a vehicle comprising the light assembly or using the light control method, a control unit implementing the light control method, a computer-readable storage medium performing the light control method, and a computer program product implementing the light control method.

### BACKGROUND

With a development of automobile industry, illuminating systems of automobiles continue to evolve. In the current automobile illuminating technology, high beam light and low beam light usually use LED light sources to emit light. The LED light sources have advantages such as high brightness, low power consumption and long service life, etc., and are widely used in the field of automobile illuminating. However, due to different shapes and modeling designs of each vehicle model, size, shape, number and arrangement of the LED light sources need to be customized according to a specific vehicle model. This means that each vehicle model needs to develop a dedicated LED vehicle lamp, which increases design and production cost. Moreover, due to a customized design needs to be performed for different vehicle models, it takes a long period from design to mass production for the LED vehicle lamp, and it is difficult to quickly respond to a market requirement for new vehicle models. In addition, the LED vehicle lamps of different vehicle models are not universal, and once damaged, the entire light assembly needs to be replaced, resulting in high maintenance cost.

Therefore, a more universal and modular vehicle lamp design is needed to meet requirements of different vehicle models and reduce design, production and maintenance cost.

### SUMMARY

It is an object of the present disclosure to solve the above problems in the prior art, and provide a light assembly for a vehicle and a corresponding light control method, so as to realize a universal and modular design of the light assembly in a cost-effective and reliable manner.

To this end, according to an aspect of the present disclosure, a light assembly for a vehicle is provided, wherein the light assembly comprises: a first light module and a second light module; and a control module configured to control brightness of the first light module and the second light module, and wherein the control module is further configured to control one of the first light module and the second light module to be turned on to provide low beam illumination, or control another of the first light module and the second light module to be turned on to provide high beam illumination or control both of the first light module and the second light module to be turned on to provide high beam illumination.

According to the above technical concept, the present disclosure may further comprise one or more of the following alternative forms.

In some alternative forms, the first light module and/or the second light module comprises a first light-emitting unit comprising a plurality of first light sources, wherein each of the first light sources has first maximum brightness.

In some alternative forms, the first light module and/or the second light module comprises a second light-emitting unit and a third light-emitting unit connected in series, wherein both of the second light-emitting unit and the third light-emitting unit comprise a plurality of second light sources, and each of the second light sources has second maximum brightness.

In some alternative forms, the first light module and/or the second light module comprises a first light-emitting unit comprising a plurality of first light sources, and each of the first light sources has the first maximum brightness, wherein the first maximum brightness is higher than the second maximum brightness.

In some alternative forms, the first light-emitting unit comprises a monitoring component, and/or at least one of the second light-emitting unit and the third light-emitting unit comprises the monitoring component, wherein the monitoring component comprises a first monitoring component configured to monitor temperature of the first light-emitting unit and/or the second light-emitting unit and the third light-emitting unit, and the control module is configured to control the brightness of the first light-emitting unit and/or the second light-emitting unit and the third light-emitting unit based on the temperature.

In some alternative forms, the monitoring component comprises a second monitoring component configured to monitor voltage and/or current of the first light-emitting unit and/or the second light-emitting unit and the third light-emitting unit, wherein the control module is configured to control the brightness of the first light-emitting unit and/or the second light-emitting unit and the third light-emitting unit based on the voltage and/or the current.

In some alternative forms, the first light module and the second light module are arranged sequentially or in parallel in the vehicle.

In some alternative forms, the control module is configured as any one of light controller, light control unit of vehicle controller, and light control unit of vehicle body controller of the vehicle.

According to another aspect of the present disclosure, a light control method for a vehicle is provided, wherein the light control method comprises steps of: providing a first light module and a second light module; making one of the first light module and the second light module as a low beam of the vehicle and another of the first light module and the second light module as a high beam of the vehicle; controlling one of the first light module and the second light module to be turned on to provide a low beam illumination; and/or controlling another of the first light module and the second light module to be turned on to provide a high beam illumination, or controlling both of the first light module and the second light module to be turned on to provide a high beam illumination.

In some alternative forms, the light control method comprises steps of: monitoring temperature of the first light module and/or the second light module; and controlling brightness of the first light module and/or the second light module based on the temperature.

In some alternative forms, the light control method comprises steps of: monitoring voltage and/or current of the first light module and/or the second light module; and controlling the brightness of the first light module and/or the second light module based on the voltage and/or the current.

According to another aspect of the present disclosure, a vehicle is provided, wherein the vehicle comprises a light assembly for a vehicle as described above, or the vehicle controls light of the vehicle by using a light control method for a vehicle as described above.

According to another aspect of the present disclosure, a control unit is provided, wherein the control unit comprises a memory, a processor, and instructions stored on the memory and executable by the processor, and wherein the processor implements a light control method for a vehicle as described above when executing the instructions.

According to another aspect of the present disclosure, a computer-readable storage medium is provided, wherein the computer-readable storage medium has computer-executable instructions stored thereon for performing a light control method for a vehicle as described above.

According to another aspect of the present disclosure, a computer program product is provided, wherein the computer program product comprises computer-executable instructions, and the computer-executable instructions, when executed by at least one processor, implement a light control method for a vehicle as described above.

Since each light module can independently realize a low beam function and a high beam function, the light assembly for the vehicle provided by the present disclosure can flexibly select or adjust configuration of the light module according to different vehicle models or illuminating requirements, facilitating the realization of diversified products and subsequent system upgrades, thereby reducing manufacturing cost and improving production efficiency, and a modular design enables a certain light module to be replaced or improved separately when there is a fault or an upgrade is required, thereby reducing the maintenance cost. In addition, in a high beam mode, brightness can be superimposed by turning on two light modules at the same time, which can not only achieve higher brightness output, but also maintain illuminating function partially by one of the light modules when another of the light modules fails, thereby improving the reliability and safety of the entire light assembly.

### BRIEF DESCRIPTION OF THE DRAWINGS

Other features and advantages of the present disclosure will be readily understood through the following optional embodiments described in detail with reference to the accompanying drawings, in the drawings:
FIG. 1 shows a schematic block diagram of a light assembly according to an embodiment of the present disclosure;
FIG. 2 shows a schematic view of a first light-emitting unit according to an embodiment of the present disclosure;
FIG. 2a shows a schematic view of a first light source in FIG. 2;
FIG. 3 shows a schematic view of a second light-emitting unit according to an embodiment of the present disclosure;
FIG. 3a shows a schematic view of a second light source in FIG. 3;
FIG. 4 shows a schematic view of a third light-emitting unit according to an embodiment of the present disclosure;
FIG. 4a shows a schematic view of the second light source in FIG. 4;
FIG. 5a shows a schematic view of an arrangement of the light assembly according to an embodiment of the present disclosure;
FIG. 5b shows a schematic view of the arrangement of the light assembly according to another embodiment of the present disclosure;
FIG. 5c shows a schematic view of the arrangement of the light assembly according to another embodiment of the present disclosure;
FIG. 5d shows a schematic view of the arrangement of the light assembly according to another embodiment of the present disclosure;
FIG. 6 shows a schematic view of the light assembly according to an embodiment of the present disclosure which is arranged in a lamp cavity of a vehicle;
FIG. 7 shows a schematic view of FIG. 6 from another perspective;
FIG. 8 shows a sectional view taken along line A-A of FIG. 6;
FIG. 9 shows a schematic circuit view of the first light-emitting unit according to an embodiment of the present disclosure;
FIG. 10 shows a schematic circuit view of a third light-emitting unit according to an embodiment of the present disclosure;
FIG. 11 shows a schematic flowchart of a light control method for a vehicle according to an embodiment of the present disclosure; and
FIG. 12 shows a schematic view of a control unit according to an embodiment of the present disclosure.

### DETAILED DESCRIPTION

The implementation and usage of the embodiments are discussed in detail below. Although the exemplary method and system described below comprise software and/or firmware executed on hardware in other components, it should be noted that these examples are merely illustrative and should not be considered limiting. Thus, while exemplary method and system have been described below, those skilled in the art will readily appreciate that the specific embodiments discussed are merely illustrative of specific ways to implement and use the disclosure, and do not limit the scope of the disclosure.

In addition, the flowcharts and block diagrams in the drawings show architectures, functions and operations that may be implemented based on the method and system according to the embodiments of the present disclosure. It should be noted that the functions noted in the blocks may also occur in an order different from that noted in the drawings. For example, two blocks shown in succession may, in fact, be executed substantially concurrently, or the two blocks may sometimes be executed in a reverse order, depending upon a function involved. It will also be noted that each block in the flowcharts and/or block diagrams, and the combination of the blocks in the flowcharts and/or block diagrams can be implemented by using a dedicated hardware-based system that performs the specified functions or operations, or can be implemented by using a combination of dedicated hardware and computer instructions.

At present, an illuminating system for a vehicle generally use LED light sources to realize a high beam function and a low beam function. In order to meet modeling and illuminating requirements of different vehicle models, the number and arrangement of the LED light sources are customized according to the specific vehicle design. The LED light sources of each vehicle are usually arranged on a circuit board, and different circuit boards need to be designed for different vehicle models. Although this design manner can ensure that the illuminating system of each vehicle can be integrated with the entire modeling of the vehicle, it also increases the research and development cost and the production cycle. In addition, this customized design results in a wide variety of illuminating systems of the vehicle on the market that are incompatible with each other. This makes the production process of manufacturer of the vehicle difficult to standardize, which is unfavorable for large-scale and high-efficiency production, thereby increasing the manufacturing cost of the manufacturer of the vehicle and also increasing the maintenance cost.

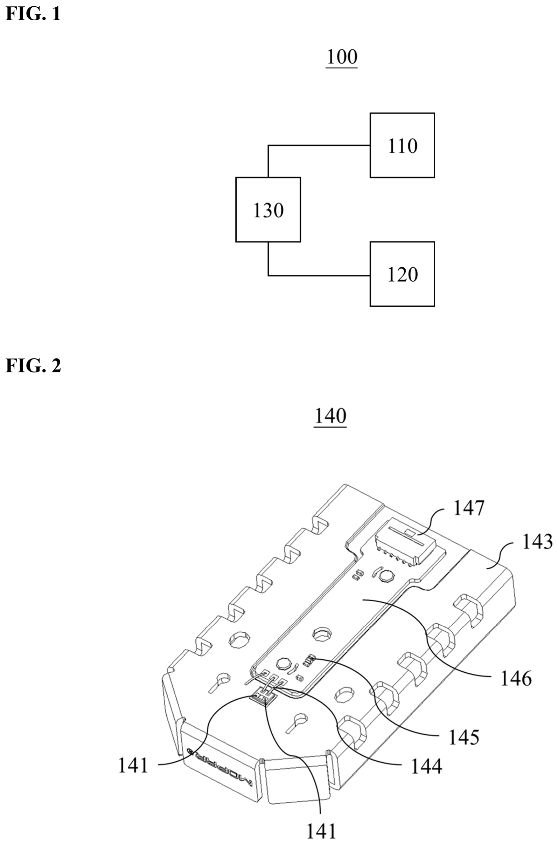

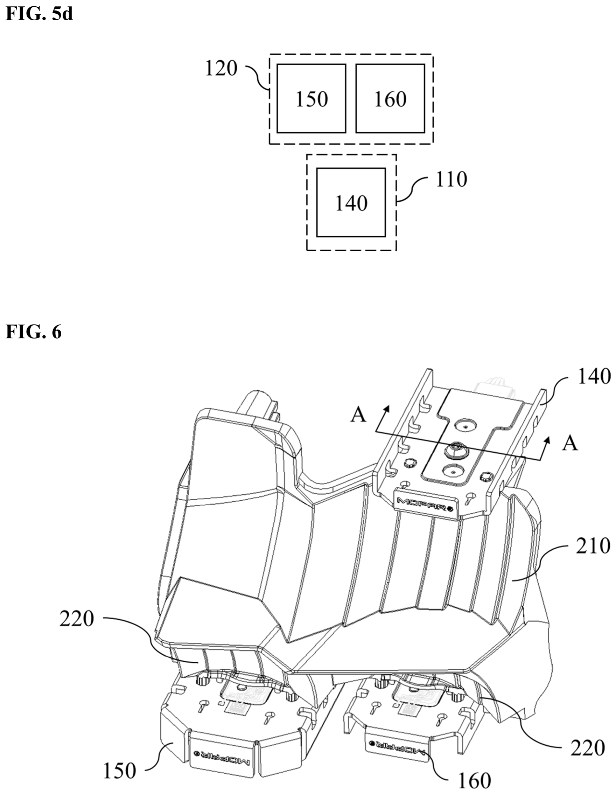

In view of this, the present disclosure first provides a light assembly for a vehicle. As shown in FIG. 1, the light assembly 100 generally comprises a first light module 110, a second light module 120 and a control module 130. Here, both of the first light module 110 and the second light module 120 may be used as a low beam and a high beam. For example, brightness (or illumination intensity) of the light module may be adjusted by changing an input current of the light module, so that the first light module 110 and the second light module 120 may be used as the low beam or the high beam. In addition, the first light module 110 and the second light module 120 may have the same standardized interface, so that each light module may independently provide illumination, or work cooperatively with another module. In a specific embodiment, the first light module 110 and the second light module 120 may be respectively arranged in a light cavity (shown in FIG. 6) of the low beam and of the high beam of the vehicle, and one of the first light module 110 and the second light module 120 is used as the low beam and another thereof is used as the high beam. The control module 130 may be configured to control the brightness of the first light module 110 and the second light module 120. For example, the control module 130 may adjust the brightness of each light module by controlling the input current of each light module. In this embodiment, in a case that a low beam illumination needs to be provided, the control module 130 may control one of the first light module 110 and the second light module 120 to be turned on. Specifically, the control module 130 may control one of the first light module 110 and the second light module 120 which is used as the low beam to be turned on to provide the low beam illumination. In a case that a high beam illumination needs to be provided, the control module 130 may control another of the first light module 110 and the second light module 120 to be turned on. Specifically, the control module 130 may control one of the first light module 110 and the second light module 120 which is used as the high beam to be turned on to provide the high beam illumination. In this case, the input current of the first light module 110 and that of the second light module 120 may be different to provide different brightness. In an alternative embodiment, in a case that the high beam illumination needs to be provided, the control module 130 may control both of the first light module 110 and the second light module 120 to be turned on, thereby superimposing the brightness of two light modules and enhancing effect of the high beam illumination. In this case, the input current of the first light module 110 and that of the second light module 120 may be the same or different to provide the high beam illumination by superimposing the brightness of the two light modules.

In this way, since each light module can independently realize the low beam function and the high beam function, it can flexibly select or adjust configuration of the module according to different vehicle models or illuminating requirements, facilitating the realization of diversified products and subsequent system upgrades, thereby reducing the manufacturing cost and improving the production efficiency, and a modular design enables a certain light module to be replaced or improved separately when there is a fault or an upgrade is required, thereby reducing the maintenance cost. In addition, in the high beam mode, the brightness can be superimposed by turning on two light modules at the same time, which can not only achieve higher brightness output, but also maintain illuminating function partially by one of the light modules when another of the light modules fails, thereby improving the reliability and safety of the entire light assembly.

In some embodiments, the control module 130 may provide the low beam illumination or the high beam illumination depending on operation of a driver. Alternatively, the control module 130 may provide the low beam illumination or the high beam illumination in response to a sensor signal of the vehicle. For example, during driving at night, the control module 130 would control one of the first light module 110 and the second light module 120 to be turned on to provide the low beam illumination when a camera or a radar of the vehicle detects that there is an opposing vehicle or a front vehicle, and the control module 130 would control another of or both of the first light module 110 and the second light module 120 to be turned on to provide the high beam illumination when it is detected that there is no other vehicle on the road. It may be understood that trigger condition of the control module 130 is not limited thereto, and may be provided and changed as required.

In addition, in the embodiment, the control module 130 may be a light controller (LCU) of the vehicle, and the light controller may independently control an illuminating system of the vehicle, including low beam, high beam, turn light, and the like. It may be understood that the control module 130 is not limited thereto. In some examples, the control module 130 may also be light control unit of vehicle controller (VCU) of the vehicle, or light control unit of vehicle body controller (BCM) of the vehicle, so as to integrate whole vehicle data to control light, thereby improving the safety of the vehicle during driving.

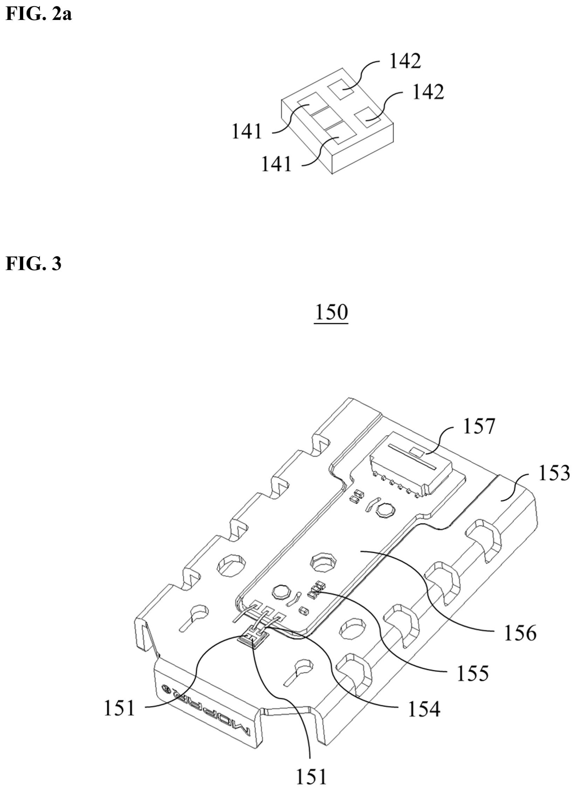

In some embodiments, the light module may comprise a light-emitting unit. As shown in FIG. 2 to FIG. 4, in an exemplary embodiment of the present disclosure, three kinds of light-emitting units are provided, namely a first light-emitting unit 140, a second light-emitting unit 150 and a third light-emitting unit 160. The three light-emitting units have similar structures, and the structures of the light-emitting units are described below by taking the first light-emitting unit 140 as an example. The first light-emitting unit 140 comprises a housing 143, which in some embodiments may be made of heat dissipating material, such as aluminum, to help the first light-emitting unit 140 transfer heat outward during operation. In FIG. 2, the first light-emitting unit 140 further comprises a plurality of first light sources 141 (three first light sources 141 are shown in FIG. 2 and FIG. 2a), the first light sources 141 may be LED light sources, and each of the first light sources 141 has a first maximum brightness. Each of the first light sources 141 is electrically connected to a PCB 146 through an electrode pad 142 (shown in FIG. 2a) and via a conducting wire 144, and an electronic component 145 is arranged on the PCB 146 and may be configured to adjust current, voltage, protecting circuit, etc., which will be described in detail below. A connector 147 is also arranged on the PCB 146, and the connector 147 may be connected to, for example, the control module 130 to provide external power and signal to the first light-emitting unit 140 through the control module 130.

During the operation of the first light-emitting unit 140, the external power and signal are transmitted to the first light-emitting unit 140 through the connector 147 and to the electronic component 145 through the PCB 146, so that the electronic component 145 starts to operate, and the external power and signal are transmitted to the plurality of first light sources 141 through the conducting wire 144, so as to make the plurality of first light sources 141 turned on to provide the low beam illumination or the high beam illumination.

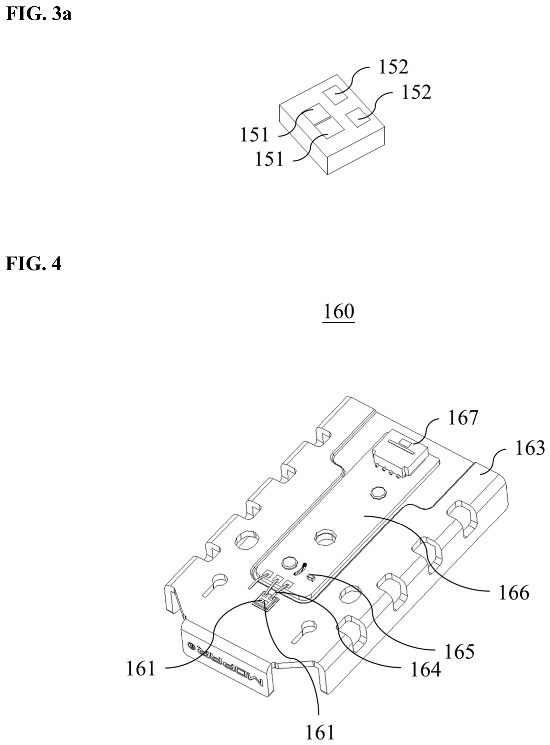

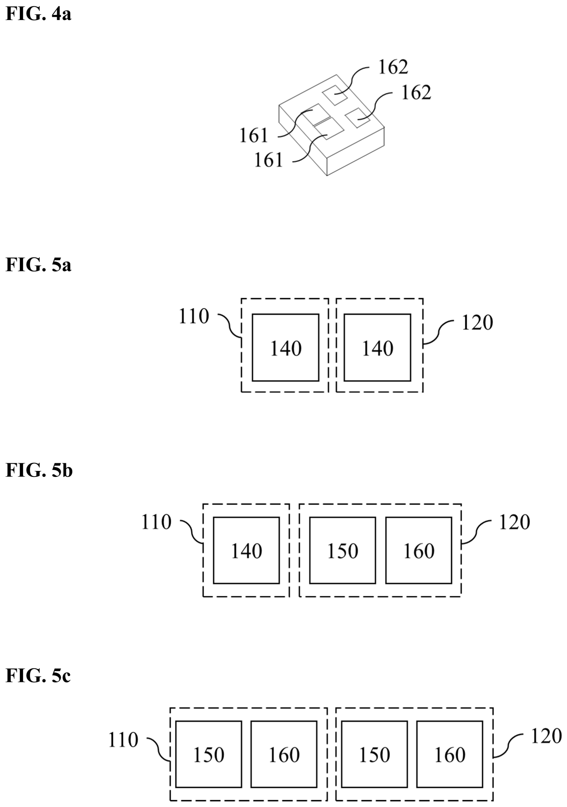

In the embodiment, the second light-emitting unit 150 and the third light-emitting unit 160 may be connected in series to enhance the brightness. In FIG. 3a and FIG. 4a, the second light-emitting unit 150 comprises two second light sources 151, the third light-emitting unit 160 comprises two second light sources 161, and each of the second light sources has a second maximum brightness. In addition, the first maximum brightness may be higher than the second maximum brightness, so that the first light-emitting unit 140 may have substantially the same brightness as the second light-emitting unit 150 and the third light-emitting unit 160 connected in series, thereby improving the universality of the light module. It may be understood that the number of the first light sources and the second light sources is not limited to those shown in the figures, and may be changed as required.

During the operation of the second light-emitting unit 150 and the third light-emitting unit 160, the external power and signal are transmitted to the second light-emitting unit 150 through, for example, a connector 157 of the second light-emitting unit 150 and to the third light-emitting unit 160 through a connector 167 of the third light-emitting unit 160. Moreover, the external power and signal are transmitted to an electronic component 155 of the second light-emitting unit 150 through a PCB 156 of the second light-emitting unit 150 and to an electronic component 165 of the third light-emitting unit 160 through a PCB 166 of the third light-emitting unit 160, so that the electronic component 155 of the second light-emitting unit 150 and the electronic component 165 of the third light-emitting unit 160 start to operate. In addition, the external power and signal are transmitted to the plurality of second light sources 151 of the second light-emitting unit 150 through a conducting wire 154 of the second light-emitting unit 150, so that the plurality of second light sources 151 of the second light-emitting unit 150 are turned on, and the external power and signal are transmitted to the plurality of second light sources 161 of the third light-emitting unit 160 through a conducting wire 164 of the third light-emitting unit 160, so that the plurality of second light sources 161 of the third light-emitting unit 160 are turned on, thereby providing the low beam illumination or the high beam illumination.

As such, the first light-emitting unit 140 may be combined with the second light-emitting unit 150 and the third light-emitting unit 160 connected in series according to, for example, the number of the lamp cavity of the low beam and that of the high beam of the vehicle, so as to realize the functions of the low beam and the high beam of the first light module 110 and the second light module 120. As shown in FIG. 5a to FIG. 5d, four exemplary embodiments are provided. In FIG. 5a, in a case that each of the low beam and the high beam of the vehicle has one lamp cavity, the first light module 110 may be used as the low beam and comprise the first light-emitting unit 140, and the second light module 120 may be used as the high beam and comprise the first light-emitting unit 140. In a case that the low beam illumination is needed, the control module 130 may control the first light-emitting unit 140 of the first light module 110 to be turned on. In a case that the high beam illumination is needed, the control module 130 may control the first light-emitting unit 140 of the second light module 120 to be turned on. In this case, the input current of the first light-emitting unit 140 of the first light module 110 and the input current of the first light-emitting unit 140 of the second light module 120 may be different. Alternatively, in a case that the high beam illumination is needed, the control module 130 may control both of the first light-emitting unit 140 of the first light module 110 and the first light-emitting unit 140 of the second light module 120 to be turned on. In this case, the input current of the first light-emitting unit 140 of the first light module 110 and the input current of the first light-emitting unit 140 of the second light module 120 may be the same or different. In FIG. 5b, in a case that the low beam of the vehicle has one lamp cavity and the high beam has two lamp cavities, the first light module 110 may be used as the low beam and comprise the first light-emitting unit 140, and the second light module 120 may be used as the high beam and comprise the second light-emitting unit 150 and the third light-emitting unit 160. In FIG. 5c, in a case that each of the low beam and the high beam of the vehicle has two lamp cavities, the first light module 110 may be used as the low beam and comprise the second light-emitting unit 150 and the third light-emitting unit 160, and the second light module 120 may be used as the high beam and comprise the second light-emitting unit 150 and the third light-emitting unit 160. The first light module 110 and the second light module 120 in FIG. 5a to FIG. 5c are sequentially arranged in the vehicle according to the structure of the lamp cavity of the vehicle. It may be understood that the arrangement of the first light module 110 and the second light module 120 is not limited thereto. In FIG. 5d, the first light module 110 and the second light module 120 may be arranged in parallel, wherein the first light module 110 may be used as the high beam and comprise the first light-emitting unit 140, and the second light module 120 may be used as the low beam and comprise the second light-emitting unit 150 and the third light-emitting unit 160. FIG. 6 to FIG. 8 show a case where the first light module 110 and the second light module 120 are arranged in parallel in the lamp cavity of the vehicle. Specifically, the lamp cavity of the low beam and that of the high beam of the vehicle are arranged in parallel, wherein the low beam has two lamp cavities, and the high beam has one lamp cavity. In this case, the first light-emitting unit 140 of the first light module is arranged in a first lamp cavity 210, and the second light-emitting unit 150 and the third light-emitting unit 160 of the second light module are arranged respectively in two second lamp cavities 220 to provide the low beam illumination and the high beam illumination respectively. It may be understood that the number of the light-emitting unit involved in the first light module 110 and the second light module 120 is not limited to those shown in the figures, and may be changed according to the number of the light-emitting unit required by the lamp cavity of the vehicle.

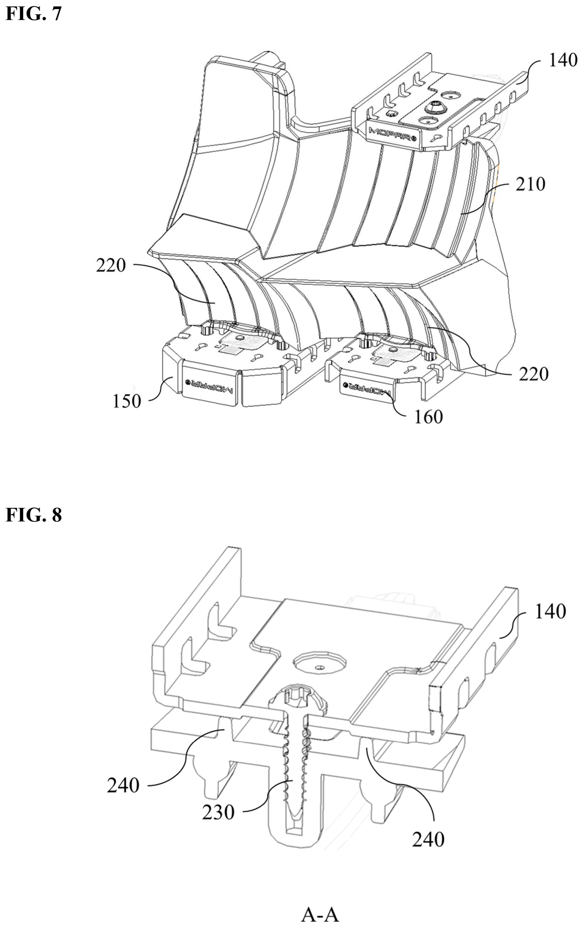

With continued reference to FIG. 8, in this example, the first light-emitting unit 140 may be fixed in the first lamp cavity through a screw 230 and a plug 240, and it may be understood that the fixing manner of the first light-emitting unit 140 is not limited thereto and may be changed as required. It is similar to the second light-emitting unit 150 and the third light-emitting unit 160.

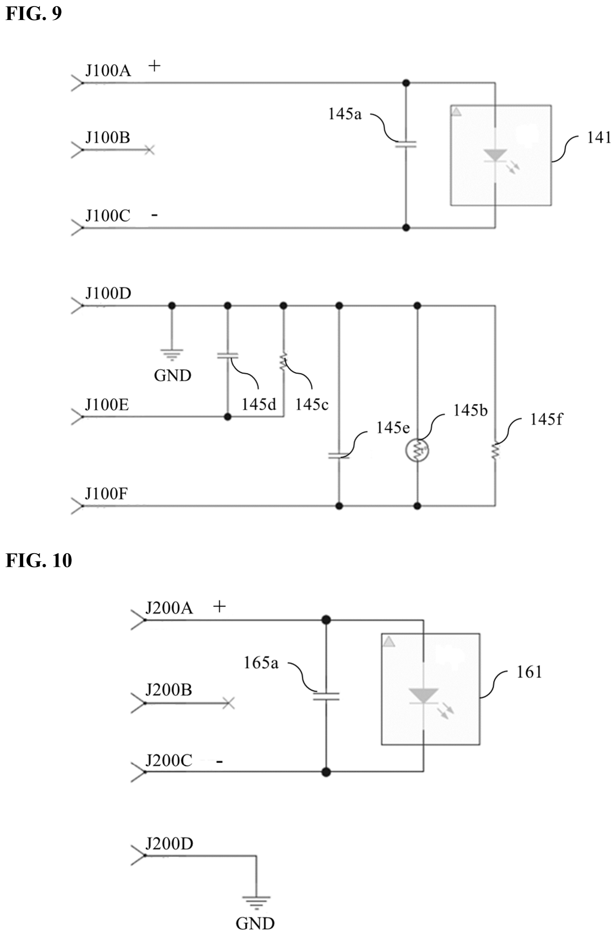

Referring to FIG. 9, a schematic circuit view of the first light-emitting unit 140 according to an embodiment of the present disclosure is shown. In FIG. 9, the first light-emitting unit 140 has six pins, namely a first pin J100A, a second pin J100B, a third pin J100C, a fourth pin J100D, a fifth pin J100E and a sixth pin J100F, wherein the first pin J100A is connected to a positive electrode of the first light source 141, the third pin J100C is connected to a negative electrode of the first light source 141, the first light source 141 is connected in parallel with a protecting capacitor 145a. The protecting capacitor 145a may smooth voltage fluctuation, filter noise, ensure that the first light source 141 obtains a stable power supply, and may prevent current or voltage fluctuation from affecting the normal operation of the first light source 141. The fourth pin J100D is connected to a ground (GND) to ensure the integrity and stability of the circuit.

In some embodiments, the first light-emitting unit 140 may comprise a monitoring component, and the monitoring component may be configured to monitor the state of the first light-emitting unit 140, for example temperature, voltage, current, etc., so that the control module 130 adjusts the input current according to the actual state of the first light-emitting unit 140, to avoid damage of the first light-emitting unit 140 caused by overheating, etc. Specifically, the monitoring component may comprise a first monitoring component 145b and a second monitoring component 145c. In FIG. 9, the fifth pin J100E is connected to the second monitoring component 145c. In the example, the second monitoring component 145c may be a monitoring resistor, and the control module 130 may acquire current and/or voltage of the monitoring resistor, and judge the type of the first light source 141 based on the acquired current and/or voltage to adjust the input current of the first light-emitting unit. For example, if the current and/or voltage reaches a certain preset value, the control module 130 may judge that the first light source 141 is a high-power light source or an ordinary light source to provide a corresponding input current. Similarly, the second monitoring component 145c may be connected in parallel with another protecting capacitor 145d to ensure the normal operation of the second monitoring component 145c. The sixth pin J100F is connected to the first monitoring component 145b. In the example, the first monitoring component 145b may be a thermistor (NTC), whose resistance value decreases as the temperature increases. The first monitoring component 145b may be configured to monitor temperature of the first light-emitting unit, and may adjust the brightness of the first light-emitting unit when the temperature of the first light-emitting unit exceeds a certain preset value. For example, the first monitoring component 145b may reduce the input current of the first light-emitting unit to reduce the brightness of the first light-emitting unit, so as to prevent the first light-emitting unit from being damaged due to excessively high temperature. Similarly, the first monitoring component 145b may be connected in parallel with yet another protecting capacitor 145e to ensure the normal operation of the first monitoring component 145b. In FIG. 9, the first light-emitting unit further comprises an adjusting resistor 145f, and the adjusting resistor 145f may be configured to limit the current in the circuit to protect the electronic component in the circuit from being damaged by the excessively high current. In addition, the second pin J100B in FIG. 9 is not connected, which can be used as a backup pin to be connected when other pins fail. It should be understood that the number of the pins of the first light-emitting unit 140 is not limited thereto, for example, the first light-emitting unit 140 may comprise only five pins.

In an example, the circuit structure of the second light-emitting unit 150 and the third light-emitting unit 160 may be the same as that of the first light-emitting unit 140, that is, both of the second light-emitting unit 150 and the third light-emitting unit 160 are configured with the monitoring component, which will not be repeated here. Advantageously, one of the second light-emitting unit 150 and the third light-emitting unit 160 may have a circuit structure as shown in FIG. 10, in which the light-emitting unit is not configured with a monitoring component. The third light-emitting unit 160 having the circuit structure shown in FIG. 10 will be described below as an example. In FIG. 10, the third light-emitting unit has four pins, namely a first pin J200A, a second pin J200B, a third pin J200C and a fourth pin J200D, wherein the first pin J200A is connected to a positive electrode of the second light source 161, the third pin J200C is connected to a negative electrode of the second light source 161, and the second light source 161 may be connected in parallel with a corresponding protecting capacitor 165a. The fourth pin J200D is connected to a ground (GND), and the second pin J200B is used as a backup pin. Since the second light-emitting unit 150 and the third light-emitting unit 160 are connected in series, the currents of the second light-emitting unit 150 and the third light-emitting unit 160 are the same, and only the second light-emitting unit 150 is provided with the monitoring component to reduce the manufacturing cost of the light assembly 100. In this case, the second light-emitting unit 150 may be used as a master light-emitting unit, and the third light-emitting unit 160 may be used as a slave light-emitting unit. As such, the input current of the second light-emitting unit 150 and the input current of the third light-emitting unit 160 may be controlled by monitoring the state of the second light-emitting unit 150, thereby controlling the brightness thereof.

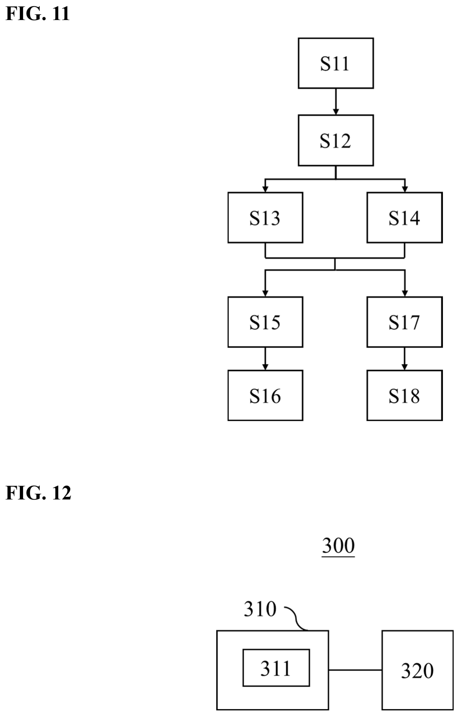

Referring to FIG. 11, a light control method for a vehicle according to an embodiment of the present disclosure comprises the following steps:
Step S11: providing a first light module and a second light module.

Step S12: making one of the first light module and the second light module as a low beam of the vehicle and another of the first light module and the second light module as a high beam of the vehicle.

Step S13: controlling one of the first light module and the second light module to be turned on to provide a low beam illumination.

Step S14: controlling another of the first light module and the second light module to be turned on to provide a high beam illumination, or controlling both of the first light module and the second light module to be turned on to provide a high beam illumination.

Additionally, the method further comprises step S15: monitoring temperature of the first light module and/or the second light module.

Step S16: controlling brightness of the first light module and/or the second light module based on the temperature.

Additionally or alternatively, the method further comprises step S17: monitoring voltage and/or current of the first light module and/or the second light module.

Step S18: controlling an input current of the first light module and/or the second light module based on the voltage and/or the current.

The functions of the light control method for a vehicle according to this embodiment may refer to the above description in conjunction with FIG. 1 to FIG. 10, which will not be repeated here.

Referring to FIG. 12, FIG. 12 is a schematic view of a control unit according to an embodiment of the present disclosure.

The present disclosure further provides a control unit 300. As shown in FIG. 12, the control unit 300 may comprise a memory 310 and a processor 320, instructions 311 may be stored in the memory 310, and the instructions 311 may be executed by the processor 320, wherein the processor 320 implements a light control method for a vehicle according to the above embodiments when executing the instructions 311.

The control unit 300 of the present embodiment may be notebook computer, desktop computer, cloud server and other devices. It may be understood that the components involved in the control unit 300 are not limited to the memory 310 and the processor 320, and may vary depending on different requirements. Exemplarily, the control unit 300 may further comprise a plurality of components (not shown in FIG. 12) connected to its input/output interfaces, including but not limited to: an input unit, for example keyboard, mouse, etc.; an output unit, for example display, speaker, etc.; a storage unit, for example semiconductor storage device, magnetic surface storage device, optical storage device, etc.; and a communicating module, for example network card, wireless communication transceiver, etc. The communicating unit allows the control unit 300 to exchange information/data with other devices through a computer network such as Internet and/or various telecommunication networks.

In some embodiments, the memory 310 may comprise, for example, Random Access Memory (RAM) or Read-Only Memory (ROM). The memory 310 may be configured to store instructions, programs, codes, and other programs and data required by the computer device, but is not limited thereto.

In addition, the processor 320 may be a Central Processing Unit (CPU), or may be another general-purpose processor, for example, Digital Signal Processing (DSP), Field-Programmable Gate Array (FPGA), or Programmable Logic Array (PLA).

In an exemplary embodiment of the present disclosure, a computer-readable storage medium is further provided, wherein the computer-readable storage medium has computer-executable instructions stored thereon, and the computer-executable instructions are configured to perform a light control method for a vehicle according to the embodiments as described above. The computer-readable storage medium can be a tangible device that can retain and store instructions used by an instruction executing device. The computer-readable storage medium may be, for example, but is not limited to, electronic storage device, magnetic storage device, optical storage device, electromagnetic storage device, semiconductor storage device, or any suitable combination thereof. More specific examples of the computer-readable storage medium comprise: portable computer disk, hard disk, Random Access Memory (RAM), Read-Only Memory (ROM), Erasable Programmable Read-Only Memory (EPROM or flash memory), Static Random Access Memory (SRAM), portable Compact Disk Read-Only Memory (CD-ROM), Digital Versatile Disk (DVD), memory stick, floppy disk, mechanical encoding device, for example, punch card or raised structure in a groove on which instructions are stored, and any suitable combination thereof. The computer-readable storage medium used herein is not construed as transitory signals themselves, such as radio waves or other freely propagated electromagnetic waves, electromagnetic waves propagated through waveguides or other transmission media (e.g., optical pulses through fiber-optic cables), or electrical signals transmitted through electrical wires.

The present disclosure further provides a computer program product tangibly stored on the computer-readable storage medium and comprising computer-executable instructions, wherein the computer-executable instructions implement a light control method for a vehicle according to the embodiments as described above when executed by at least one processor.

Generally, various embodiments of the present disclosure may be implemented in hardware, dedicated circuits, software programs, firmware, logic circuits, or any combination thereof, as desired. In particular, some aspects may be implemented in hardware, and other aspects may be implemented in firmware or software programs executable by controller, microprocessor, or other computing device. While various aspects of the embodiments of the present disclosure are illustrated and described as block diagrams, flowcharts, or represented using some other figures, it will be appreciated that the blocks, devices, systems, techniques or methods described herein may be implemented in, as non-limiting examples, hardware, software, firmware, dedicated circuits, logic circuits, general hardware or controller or other computing devices, or some combination thereof.

The computer-readable program instructions or the computer program product for implementing various embodiments of the present disclosure can also be stored in cloud, and when needing to be invoked, the user can access the computer-readable program instructions for implementing one embodiment of the present disclosure stored on the cloud through mobile Internet, fixed network or other networks, thereby implementing various embodiments of the present disclosure.

It should be understood that the embodiments shown in the drawings only illustrate the optional configuration of the light assembly for the vehicle according to the present disclosure. However, these embodiments are merely intended to be illustrative rather than restrictive. Other configurations may be adopted without departing from the spirit and scope of the present disclosure.

The technical contents and technical features of the present disclosure have been disclosed above. However, it may be understood that, those skilled in the art can make various changes and improvements to the above-disclosed concept under the creative concept of the present disclosure, and all these various changes and improvements still fall within the scope of protection of the present disclosure. The description of the foregoing embodiments is illustrative rather than restrictive, and the scope of protection of the present disclosure is determined by the appended claims.

## Claims

1. A light assembly (100) for a vehicle, comprising:
- a first light module (110) and a second light module (120);
- a control module (130) configured to control brightness of the first light module (110) and the second light module (120),
wherein the control module (130) is further configured to control one of the first light module (110) and the second light module (120) to be turned on to provide low beam illumination, or control another of the first light module (110) and the second light module (120) to be turned on to provide high beam illumination or control both of the first light module (110) and the second light module (120) to be turned on to provide high beam illumination.

2. The light assembly according to claim 1, wherein the first light module (110) and/or the second light module (120) comprises a first light-emitting unit (140) comprising a plurality of first light sources (141), and wherein each of the first light sources (141) has first maximum brightness.

3. The light assembly according to claim 1 or 2, wherein the first light module (110) and/or the second light module (120) comprises a second light-emitting unit (150) and a third light-emitting unit (160) connected in series, and wherein both of the second light-emitting unit (150) and the third light-emitting unit (160) comprise a plurality of second light sources (151, 161), and each of the second light sources (151, 161) has second maximum brightness.

4. The light assembly according to claim 3, wherein the first light module (110) and/or the second light module (120) comprises a first light-emitting unit (140) comprising a plurality of first light sources (141), and each of the first light sources (141) has the first maximum brightness, and wherein the first maximum brightness is higher than the second maximum brightness.

5. The light assembly according to claim 3, wherein the first light-emitting unit (140) comprises a monitoring component, and/or at least one of the second light-emitting unit (150) and the third light-emitting unit (160) comprises the monitoring component, and wherein the monitoring component comprises a first monitoring component (145b) configured to monitor temperature of the first light-emitting unit (140) and/or the second light-emitting unit (150) and the third light-emitting unit (160), and the control module (130) is configured to control the brightness of the first light-emitting unit (140) and/or the second light-emitting unit (150) and the third light-emitting unit (160) based on the temperature.

6. The light assembly according to claim 5, wherein the monitoring component comprises a second monitoring component (145c) configured to monitor voltage and/or current of the first light-emitting unit (140) and/or the second light-emitting unit (150) and the third light-emitting unit (160), and wherein the control module (130) is configured to control the brightness of the first light-emitting unit (140) and/or the second light-emitting unit (150) and the third light-emitting unit (160) based on the voltage and/or the current.

7. The light assembly according to claim 1, wherein the first light module (110) and the second light module (120) are arranged sequentially or in parallel in the vehicle.

8. The light assembly according to claim 1, wherein the control module (130) is configured as any one of light controller, light control unit of vehicle controller, and light control unit of vehicle body controller of the vehicle.

9. A light control method for a vehicle, comprising steps of:
- providing a first light module (110) and a second light module (120) (S11);
- making one of the first light module (110) and the second light module (120) as a low beam of the vehicle and another of the first light module (110) and the second light module (120) as a high beam of the vehicle (S12);
- controlling one of the first light module (110) and the second light module (120) to be turned on to provide a low beam illumination (S13); and/or
- controlling another of the first light module (110) and the second light module (120) to be turned on to provide a high beam illumination, or controlling both of the first light module (110) and the second light module (120) to be turned on to provide a high beam illumination (S14).

10. The light control method according to claim 9, comprising steps of:
- monitoring temperature of the first light module (110) and/or the second light module (120) (S15); and
- controlling brightness of the first light module (110) and/or the second light module (120) based on the temperature (S16).

11. The light control method according to claim 9 or 10, comprising steps of:
- monitoring voltage and/or current of the first light module (110) and/or the second light module (120) (S17); and
- controlling the brightness of the first light module (110) and/or the second light module (120) based on the voltage and/or the current (S18).

12. A vehicle, wherein the vehicle comprises a light assembly for a vehicle according to any one of claims 1 to 8, or the vehicle controls light of the vehicle by using a light control method for a vehicle according to any one of claims 9 to 11.

13. A control unit (300) comprising a memory (310), a processor (320) and instructions (311) stored on the memory (310) and executable by the processor (320), wherein the processor (320) implements a light control method for a vehicle according to any one of claims 9 to 11 when executing the instructions (311).

14. A computer-readable storage medium having computer-executable instructions stored thereon for performing a light control method for a vehicle according to any one of claims 9 to 11.

15. A computer program product comprising computer-executable instructions, wherein the computer-executable instructions, when executed by at least one processor, implement a light control method for a vehicle according to any one of claims 9 to 11.
